# EUROPÄISCHE PATENTSCHRIFT

(11) **EP 0 915 240 B1**
(45) Veröffentlichungstag und Bekanntmachung des Hinweises auf die Patenterteilung: **12.03.2003**
(21) Anmeldenummer: 97810846.2
(22) Anmeldetag: 10.11.1997
(51) Int. Cl.: F02C 7/22, F02C 7/232, G01M 3/28

(54) **Verfahren zum Prüfen der Dichtheit eines Brennstoffverteilsystems einer Gasturbine**
Leakage testing of gas turbine fuel manifolds
Méthode pour détecter les fuites des conduits de carburant d'une turbine à gaz

(43) Veröffentlichungstag der Anmeldung: 12.05.1999
(73) Patentinhaber: ALSTOM (Switzerland) Ltd, 5401 Baden (CH)
(72) Erfinder: Künzi, Thomas, 4127 Birsfelden (CH); Müller, Gerhard, 5430 Wettingen (CH); Witt, Michael, 68219 Mannheim (DE)

(56) Entgegenhaltungen:
- DE-A- 4 335 412
- DE-A- 19 513 158
- GB-A- 2 102 524
- GB-A- 2 129 541
- US-A- 4 185 462
- US-A- 4 197 733
- US-A- 5 259 185
- US-A- 5 263 314
- US-A- 5 307 620
- "Richtlinie für Verbindungsleitungen zum Befördern gefährdender Flüssigkeiten" Juni 1986 , CARL HEYMANS VERLAG , KÖLN XP002061343 * Seite 9, Absatz 9 *

## Beschreibung

### TECHNISCHES GEBIET

Die vorliegende Erfindung bezieht sich auf das Gebiet der Gasturbinen. Sie betrifft ein Verfahren zum Prüfen der Dichtheit eines Brennstoffverteilsystems einer Gasturbine mit Mehrbrennersystem, welches Brennstoffverteilsystem Brennstoff über eine Brennstoffzuleitung auf eine Mehrzahl von Brennern verteilt.

Sie betrifft weiterhin eine Vorrichtung zur Durchführung des Verfahrens, umfassend eine Gasturbine mit einem Mehrbrennersystem, einem Brennstoffverteilsystem, welches Brennstoffverteilsystem Brennstoff über eine Brennstoffzuleitung auf die einzelnen Brennern verteilt, sowie ein Wasserverteilsystem, welches Wasser über ein Wasserzuleitung zum Eindüsen auf die Brenner verteilt.

### STAND DER TECHNIK

In modernen Gasturbinen, welche mit emissionsarmen Mehrbrennersystemen ausgerüstet sind - wie dies zum Beispiel bei der von der Anmelderin angebotenen Gasturbine vom Typ GT8C der Fall ist - wird der Brennstoff (z.B. Naphtha) über ein komplexes Brennstoffverteilsystem zu einer Mehrzahl (von beispielsweise 18) Brennstofflanzen befördert. Die Brennstoffleitungen des Brennstoffverteilsystems sind dabei aus Gründen der Montagefreundlichkeit an mehreren Stellen auftrennbar bzw. durch handelsübliche (lösbare) Verbindungselemente miteinander verbunden.

Diese Trennstellen bzw. Verbindungselemente erweisen sich in der Praxis als typische Stellen für Brennstoffleckagen. Um den Schutz der Gasturbine sicherzustellen, wird der das Brennstoffverteilsystem umgebende Raum mit Brennstoffschnüfflern überwacht. Wird durch die Brennstoffschnüffler während des Betriebes der Gasturbine das Ueberschreiten einer vorgegebenen Grenzkonzentration festgestellt, wird die Brennstoffzufuhr unterbrochen und die Gasturbine abgestellt.

Besonders nach Montagearbeiten am Brennstoffverteilsystem oder an den Brennern, die meist ein zeitweises Auftrennen der Brennstoffleitungen erfordern, kommt es im Brennstoffverteilsystem vermehrt zu Leckagen, welche erst im Betrieb erkannt werden und dann ein Gefahrenpotential darstellen. Muss die Gasturbine dann abgeschaltet werden, verringert sich insgesamt die Verfügbarkeit der Anlage. Zugleich stellen derartige Betriebsunterbrechungen unnötige Belastungszyklen für die Gesamtanlage dar.

### DARSTELLUNG DER ERFINDUNG

Es ist daher Aufgabe der Erfindung, ein Verfahren zum Prüfen der Dichtheit eines Brennstoffverteilsystems sowie eine Vorrichtung zur Durchführung des Verfahrens zu schaffen, welche die Wahrscheinlichkeit von während des Betriebes auftretenden Leckagen deutlich reduzieren und die damit verbundenen Nachteile beseitigen.

Die Aufgabe wird bei einem Verfahren der eingangs genannten Art dadurch gelöst, dass das Brennstoffverteilsystem im abgeschalteten Zustand der Gasturbine mit einem unter Druck stehenden flüssigen und nicht brennbaren Hilfsmedium abgedrückt wird. Durch das Abdrücken mit einem ungefährlichen Hilfsmedium vor dem Betriebsbeginn können Leckagen im Verteilsystem auf einfache und sichere Weise frühzeitig erkannt und behoben werden. Die Verwendung eines flüssigen Hilfsmediums schafft Prüfbedingungen, die den Betriebsbedingungen des Verteilsystems bei Einsatz von flüssigen Brennstoffen ähnlich sind. Darüber hinaus ergibt sich wegen der geringen Kompressibilität einer Flüssigkeit beim Auftreten einer Leckage sofort ein starker Druckabfall, der einerseits gut ausgewertet werden kann und andererseits gegenüber einem unter Druck stehenden Gas nur ein geringes Sicherheitsrisiko darstellt. Insbesondere ist eine Wasserleckage im Gesamtsystem sehr gut zu lokalisieren.

Eine erste bevorzugte Ausführungsform des Verfahrens nach der Erfindung zeichnet sich dadurch aus, dass die Brennstoffleitungen des Brennstoffverteilsystems aus Gründen der Montagefreundlichkeit an mehreren Stellen auftrennbar ausgebildet sind, und dass die Prüfung auf Dichtheit nach jeder Montageaktion an den auftrennbaren Brennstoffleitungen vor dem nächsten Start der Gasturbine durchgeführt wird. Auf diese Weise können neu auftretende Leckagen, die aufgrund von Montagearbeiten am System entstanden sind, jederzeit sofort und zuverlässig identifiziert und behoben werden.

Eine zweite bevorzugte Ausführungsform des erfindungsgemässen Verfahrens ist dadurch gekennzeichnet, dass als Hilfsmedium zum Prüfen der Dichtheit Wasser verwendet wird, dass neben dem Brennstoffverteilsystem in der Gasturbine ein Wasserverteilsystem vorhanden ist, welches Wasser über ein Wasserzuleitung zum Eindüsen auf die Brenner verteilt, und dass zum Prüfen der Dichtheit das Wasserverteilsystem mit dem zu prüfenden Brennstoffverteilsystem für die Dauer des Prüfvorgangs verbunden wird. Wasser als Hilfsmedium ist billig, ungefährlich, einfach zu handhaben, und wirft keinerlei Umweltprobleme auf. Durch die Verwendung des vorhanden Wasserverteilsystems für die Prüfung der Dichtheit des Brennstoffverteilsystems lässt sich mit geringem Zusatzaufwand ein Leckagetestsystem aufbauen, das zudem auch bei bereits vorhandenen Gasturbinenanlagen auf einfache Weise nachgerüstet werden kann.

Besonders einfach gestaltet sich die Testeinrichtung, wenn gemäss einer bevorzugten Weiterbildung dieser Ausführungsform für das Wasserverteilsystem Mittel, insbesondere in Form einer Wasserpumpe, zum Erzeugen des für die Eindüsung in den Brennern notwendigen Wasserdrucks vorhanden sind, und wenn die Mittel verwendet werden, um den für die Prüfung der Dichtheit des Brennstoffverteilsystems notwendigen Wasserdruck zu erzeugen. Hierdurch kann auf spezielle Druckerzeugungseinrichtungen für das Leckagetestsystem verzichtet werden. Die erfindungsgemässe Vorrichtung der eingangs genannten Art zur Durchführung des Verfahrens ist dadurch gekennzeichnet, dass das Wasserverteilsystem mit dem Brennstoffverteilsystem über eine Leckagetestleitung verbunden ist, in welcher wenigstens ein Absperrorgan angeordnet ist. Hierdurch wird mit minimalem Aufwand ein System zur Prüfung der Dichtheit verwirklicht, welches auf einfache Weise und unter weitgehender Ausnutzung vorhandener Anlagenteile eine schnelle und effiziente und ggf. automatisierbare Prüfung des Brennstoffverteilsystems ermöglicht.

Eine bevorzugte Ausführungsform der erfindungsgemässen Vorrichtung ist dadurch gekennzeichnet, dass in der Wasserzuleitung hintereinander ein Schnellschlussventil und ein Hauptregelventil angeordnet sind, und dass die Leckagetestleitung hinter den beiden Ventilen die Brennstoffzuleitung mit der Wasserzuleitung verbindet. Auf diese Weise können die beiden Ventile für die Leckageprüfung des Brennstoffverteilsystems mit eingesetzt werden.

Weitere Ausführungsformen ergeben sich aus den abhängigen Ansprüchen.

### KURZE ERLÄUTERUNG DER FIGUREN

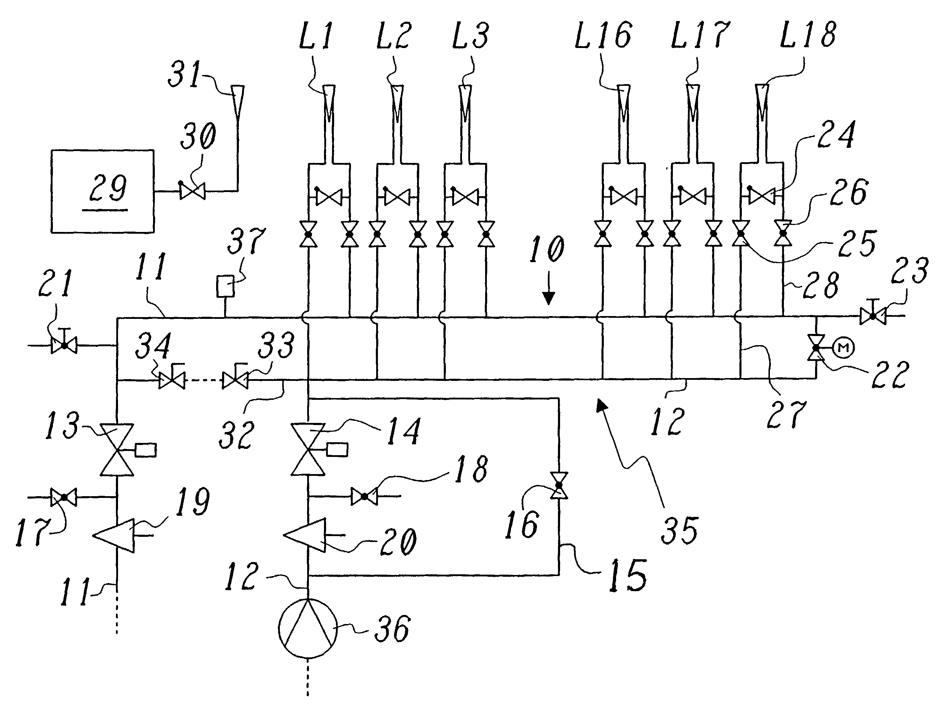

Die Erfindung soll nachfolgend anhand von Ausführungsbeispielen im Zusammenhang mit der Zeichnung näher erläutert werden. Die einzige Figur zeigt in einem Leitungsschema ein bevorzugtes Ausführungsbeispiel für eine erfindungsgemässe Vorrichtung zur Durchführung des Verfahrens nach der Erfindung.

### WEGE ZUR AUSFÜHRUNG DER ERFINDUNG

In der Figur ist als Ausführungsbeispiel das Leitungsschema eines Brennstoff- und Wasserverteilsystems für eine Gasturbine mit Mehrbrennersystem wiedergegeben, mit welchem eine Prüfung auf Dichtheit des Brennstoffverteilsystems gemäss der Erfindung auf einfache Weise durchgeführt werden kann. Das Mehrbrennersystem umfasst eine Anzahl von 18 Brennstofflanzen L1,..,L18, von denen der Einfachheit halber nur die ersten und letzten drei L1,..,L3 bzw. L16,..,L18 gezeigt sind. Jede der Brennstofflanzen L1,..,L18 dient zur Eindüsung von Brennstoff (Oel, Naphta o.ä.) in einen entsprechenden Brenner, in welchem die für den Antrieb der Gasturbine notwendigen heissen Gase erzeugt werden. Neben dem Brennstoff kann durch die Brennstofflanzen L1,..,L18 zusätzlich Wasser in den Brenner eingedüst werden, um beispielsweise die Temperatur in der Brennkammer zu erniedrigen und damit den Ausstoss von NOx zu verringern. Zusätzlich zu den Brennern bzw. Brennstofflanzen L1,..,L18 ist zum Zünden der Anlage ein Zündbrenner 31 vorhanden, der über ein Rückschlagventil 30 aus einem Propangasblock 29 mit Propangas versorgt wird.

Der Brennstoff wird zentral durch eine Brennstoffzuleitung 11 zugeführt und durch ein Brennstoffverteilsystem 10 auf die einzelnen Brennstofflanzen L1,..,L18 bzw. Brenner verteilt. Dazu ist jede Brennstofflanze L1,..,L18 über eine eigene Abzweigleitung (28 für Brennstofflanze L18) an die Brennstoffzuleitung 11 angeschlossen und über ein in der Abzweigleitung 28 angeordnetes Einzelschaltventil (26 für Brennstofflanze L18) von dem Brennstoffverteilsystem 10 abtrennbar.

Das Wasser wird ebenfalls zentral von einer Wasserpumpe 36 durch eine Wasserzuleitung 12 zugeführt und durch ein Wasserverteilsystem 35 auf die einzelnen Brennstofflanzen L1,..,L18 bzw. Brenner verteilt. Dazu ist jede Brennstofflanze L1,..,L18 über eine eigene Abzweigleitung (27 für Brennstofflanze L18) an die Wasserzuleitung 12 angeschlossen und über ein in der Abzweigleitung 27 angeordnetes Einzelschaltventil (25 für Brennstofflanze L18) von dem Wasserverteilsystem 35 abtrennbar. Hinter den beiden Einzelschaltventilen 25, 26 ist in jeder Brennstofflanze ein Rückschlagventil (24 für Brennstofflanze L18) zwischen den Abzweigleitungen 27, 28 eingefügt.

In der Brennstoffzuleitung 11 sind hintereinander ein Schnellschlussventil 19 und ein Hauptregelventil 13 angeordnet. Das Schnellschlussventil 19 wird geschlossen, wenn bei einer Störung die Brennstoffzufuhr schnell unterbrochen werden soll. Mit dem Hauptregelventil 13 kann die Brennstoffzufuhr zu den Brennern während des Betriebes geregelt werden. Ueber ein zwischen Schnellschlussventil 19 und Hauptregelventil 13 von der Brennstoffzuleitung 11 abzweigendes automatisches Drainageventil 17 kann im Brennstoffverteilsystem 10 verbleibender Brennstoff abgelassen werden. Mit den gleichen Funktionen bezüglich des Wassers sind in der Wasserzuleitung 12 ein Schnellschlussventil 20, ein Hauptregelventil 14 und eine automatisches Drainageventil 18 eingesetzt. Zusätzlich ist am Brennstoffverteilsystem 10 noch ein weiteres manuelles Drainageventil 21 angeordnet, welches geöffnet wird, wenn das Brennstoffverteilsystem 10 über ein manuelles Spülventil 23 mit N₂ gespült wird.

Das Brennstoffverteilsystem 10 und das Wasserverteilsystem 35 sind nun auf zwei Arten untereinander verbunden: Einerseits verläuft hinter den Hauptregelventilen 13, 14 eine Leckagetestleitung 32 zwischen der Brennstoffzuleitung 11 und der Wasserzuleitung 12. In dieser Leckagetestleitung 32 sind hintereinander mehrere Absperrorgane (Absperrventile) 33, 34 angeordnet, mittels derer die Leckagetestleitung 32 im Normalbetrieb der Anlage sicher unterbrochen werden kann. Andererseits sind die beiden Systeme über einen automatisierten Kugelhahn 22 miteinander verbindbar. Die Verbindung über die Leckagetestleitung 32 dient zur Prüfung der Dichtheit des Brennstoffverteilsystems 10. Die Verbindung über den Kugelhahn 22 dient zum Spülen des Brennstoffverteilsystems 10 mit Wasser, wobei das Spülwasser über eine Bypassleitung 15 mit Ventil 16 an den Ventilen 14 und 20 vorbei herangeführt wird.

Zum Leckagetest werden bei ansonsten geschlossenen Brennstoffarmaturen bzw. Ventilen zunächst die Absperrventile 33, 34 in der Leckagetestleitung 32 geöffnet. Gleichzeitig werden das Schnellschlussventil 20 und das Hauptregelventil 14 in der Wasserzuleitung 12 geöffnet. Dann wird die Wasserpumpe 36 gestartet. dadurch füllt sich über die Leckagetestleitung 32 das Brennstoffverteilsystem 10 mit Wasser bis zu einem Druck, der vorzugsweise dem maximal zu erwartenden Brennstoffdruck entspricht. Alle Undichtigkeiten im Brennstoffverteilsystem 11 können nun ohne Gefahr dadurch erkannt und analysiert werden, dass durch optische Kontrolle (Fersehkamera, Inaugenscheinnahme etc.) Leckagen lokalisiert werden, und/oder dass das System bei Erreichen des Solldruckes abgeschlossen und der zeitliche Verlauf des Wasserdruckes im System z.B. mittels eines (oder mehrerer) angeschlossenen Druckaufnehmer(s) 37 überwacht und gemessen wird. Sobald die Leckagen entdeckt und lokalisiert sind, können sie behoben werden. Nach dem Abschluss des Tests und vor dem eigentlichen Start der Gasturbine werden das Wasserverteilsystem 35 und das Brennstoffverteilsystem 10 schliesslich wieder in ihren Ausgangszustand zurückgeführt. Der ganze Leckagetest kann bei der in der Figur dargestellten Anlagenkonfiguration im übrigen halbautomatisiert durchgeführt werden.

Insgesamt ergibt sich mit der Erfindung eine einfache und sichere Möglichkeit, gefährliche Leckagen im Brennstoffverteilsystem einer Gasturbine frühzeitig aufzuspüren und zu beheben, wodurch zusätzliche Stillstandszeiten und gefährliche Betriebszustände der Anlage vermieden werden.

### BEZEICHNUNGSLISTE

- 10: Brennstoffverteilsystem
- 11: Brennstoffzuleitung
- 12: Wasserzuleitung
- 13: Hauptregelventil (Brennstoff)
- 14: Hauptregelventil (Wasser)
- 15: Bypassleitung
- 16: Ventil (Bypassleitung)
- 17: autom. Drainageventil (Brennstoff)
- 18: autom. Drainageventil (Wasser)
- 19: Schnellschlussventil (Brennstoff)
- 20: Schnellschlussventil (Wasser)
- 21: man. Drainageventil
- 22: autom. Kugelhahn
- 23: man. Spülventil
- 24: Rückschlagventil (Brennstofflanze)
- 25,26: Einzelschaltventil (Brennstofflanze)
- 27: Abzweigleitung (Brennstoff)
- 28: Abzweigleitung (Wasser)
- 29: Propangasblock
- 30: Rückschlagventil
- 31: Zündbrenner
- 32: Leckagetestleitung
- 33,34: Absperrventil
- 35: Wasserverteilsystem
- 36: Wasserpumpe
- 37: Druckaufnehmer
- L1,..,L18: Brennstofflanze

## Patentansprüche

1. Verfahren zum Prüfen der Dichtheit eines Brennstoffverteilsystems (10) einer Gasturbine mit Mehrbrennersystem, welches Brennstoffverteilsystem (10) Brennstoff über eine Brennstoffzuleitung (11) auf eine Mehrzahl von Brennern (L1,..,L18) verteilt, **dadurch gekennzeichnet, dass** das Brennstoffverteilsystem (10) im abgeschalteten Zustand der Gasturbine mit einem unter Druck stehenden flüssigen und nicht brennbaren Hilfsmedium abgedrückt wird.

2. Verfahren nach Anspruch 1, **dadurch gekennzeichnet, dass** die Brennstoffleitungen (11, 27) des Brennstoffverteilsystems (10) aus Gründen der Montagefreundlichkeit an mehreren Stellen auftrennbar ausgebildet sind, und dass die Prüfung auf Dichtheit nach jeder Montageaktion an den auftrennbaren Brennstoffleitungen (11, 27) vor dem nächsten Start der Gasturbine durchgeführt wird.

3. Verfahren nach einem der Ansprüche 1 und 2, **dadurch gekennzeichnet, dass** als Hilfsmedium zum Prüfen der Dichtheit Wasser verwendet wird.

4. Verfahren nach Anspruch 3, **dadurch gekennzeichnet, dass** neben dem Brennstoffverteilsystem (10) in der Gasturbine ein Wasserverteilsystem (35) vorhanden ist, welches Wasser über ein Wasserzuleitung (12) zum Eindüsen auf die Brenner (L1,..,L18) verteilt, und dass zum Prüfen der Dichtheit das Wasserverteilsystem (35) mit dem zu prüfenden Brennstoffverteilsystem (10) für die Dauer des Prüfvorgangs verbunden wird.

5. Verfahren nach Anspruch 4, **dadurch gekennzeichnet, dass** das Wasserverteilsystem (35) mit dem Brennstoffverteilsystem (10) über eine Leckagetestleitung (32) verbunden ist, in welcher wenigstens ein Absperrorgan (33, 34) angeordnet ist, und dass zum Prüfen der Dichtheit das wenigstens eine Absperrorgan (33, 34) für die Dauer des Prüfvorgangs geöffnet wird.

6. Verfahren nach einem der Ansprüche 4 und 5, **dadurch gekennzeichnet, dass** für das Wasserverteilsystem (35) Mittel, insbesondere in Form einer Wasserpumpe (36), zum Erzeugen des für die Eindüsung in den Brennern (L1,..,L18) notwendigen Wasserdrucks vorhanden sind, und dass die Mittel (36) verwendet werden, um den für die Prüfung der Dichtheit des Brennstoffverteilsystems (10) notwendigen Wasserdruck zu erzeugen.

7. Verfahren nach einem der Ansprüche 1 bis 6, **dadurch gekennzeichnet, dass** das Brennstoffverteilsystem (10) zur Prüfung der Dichtheit mit einem Druck abgedrückt wird, der dem während des Betriebes zu erwartenden maximalen Brennstoffdruck entspricht.

8. Verfahren nach einem der Ansprüche 1 bis 7, **dadurch gekennzeichnet, dass** die Prüfung der Dichtheit des Brennstoffverteilsystems (10) über eine optische Kontrolle auf Austreten des Hilfsmediums bzw. Wassers aus dem System erfolgt.

9. Verfahren nach einem der Ansprüche 1 bis 7, **dadurch gekennzeichnet, dass** die Prüfung der Dichtheit des Brennstoffverteilsystems (10) über eine Kontrolle des im abgeschlossenen System herrschenden Druckes erfolgt.

10. Vorrichtung zur Durchführung des Verfahrens nach einem der Ansprüche 1 bis 9, umfassend eine Gasturbine mit einem Mehrbrennersystem, einem Brennstoffverteilsystem (10), welches Brennstoffverteilsystem (10) Brennstoff über eine Brennstoffzuleitung (11) auf die einzelnen Brennern (L1,..,L18) verteilt, sowie ein Wasserverteilsystem (35), welches Wasser über eine Wasserzuleitung (12) zum Eindüsen auf die Brenner (L1,..,L18) verteilt, **dadurch gekennzeichnet, dass** das Wasserverteilsystem (35) mit dem Brennstoffverteilsystem (10) über eine Leckagetestleitung (32) verbunden ist, in welcher wenigstens ein Absperrorgan (33, 34) angeordnet ist.

11. Vorrichtung nach Anspruch 10, **dadurch gekennzeichnet, dass** in der Wasserzuleitung (12) jeweils hintereinander ein Schnellschlussventil (20) und ein Hauptregelventil (14) angeordnet sind, und dass die Leckagetestleitung (32) hinter den beiden Ventilen (14, 20) die Brennstoffzuleitung (11) mit der Wasserzuleitung (12) verbindet.

12. Vorrichtung nach einem der Ansprüche 10 und 11, **dadurch gekennzeichnet, dass** in der Leckagetestleitung (32) aus Sicherheitsgründen eine Mehrzahl von Absperrorganen (33, 34) hintereinander angeordnet sind.

## Claims

1. Method of testing the leak-tightness of a fuel distribution system (10) of a gas turbine with multiburner system, which fuel distribution system (10) distributes fuel by means of a fuel supply line (11) to a plurality of burners (L1, .., L18), **characterized in that**, in the switched-off condition of the gas turbine, the fuel distribution system (10) is hydraulically tested with a liquid, and incombustible, auxiliary medium under pressure.

2. Method according to Claim 1, **characterized in that** the fuel lines (11, 27) of the fuel distribution system (10) are, for reasons of ease of assembly, configured so that they can be separated at a plurality of locations, and **in that** the testing for leak-tightness is carried out after each assembly operation on the separable fuel lines (11, 27) before the next start of the gas turbine.

3. Method according to one of Claims 1 and 2, **characterized in that** water is used as the auxiliary. medium for testing the leak-tightness.

4. Method according to Claim 3, **characterized in that** in addition to the fuel distribution system (10), a water distribution system (35) is present in the gas turbine, which water distribution system (35) distributes water by means of a water supply line (12) for injection to the burners (L1, .., L18), and **in that** in order to test the leak-tightness, the water distribution system (35) is connected, for the duration of the test procedure, to the fuel distribution system (10) to be tested.

5. Method according to Claim 4, **characterized in that** the water distribution system (35) is connected to the fuel distribution system (10) by means of a leak test line (32) in which at least one shut-off element (33, 34) is arranged, and **in that**, in order to test the leak-tightness, the at least one shut-off element (33, 34) is opened for the duration of the test procedure.

6. Method according to one of Claims 4 and 5, **characterized in that**, for the water distribution system (35), means, in particular in the form of a water pump (36), are provided for the generation of the water pressure necessary for the injection into the burners (L1, .., L18), and **in that** the means (30) are employed in order to generate, the water pressure necessary for the testing of the leak-tightness of the fuel distribution system (10).

7. Method according to one of Claims 1 to 6, **characterized in that**, to test the leak-tightness, the fuel distribution system (10) is hydraulically tested with a pressure which corresponds to the maximum fuel pressure to be expected during operation.

8. Method according to one of Claims 1 to 7, **characterized in that** the testing of the leak-tightness of the fuel distribution system (10) takes place by means of an optical inspection for the appearance of the auxiliary medium, or water, from the system.

9. Method according to one of Claims 1 to 7, **characterized in that** the testing of the leak-tightness of the fuel distribution system (10) takes place by means of an inspection for the pressure present in the system, which has been closed off.

10. Appliance for carrying out the method according to one of Claims 1 to 9, comprising a gas turbine with a multiburner system, a fuel distribution system (10), which fuel distribution system (10) distributes fuel by means of a fuel supply line (11) to the individual burners (L1, .., L18), together with a water distribution system (35), which distributes water by means of a water supply line (12) for injection to the burners (L1, .., L18), **characterized in that** the water distribution system (35) is connected to the fuel distribution system (10) by means of a leak test line (32), in which at least one shut-off element (33, 34) is arranged.

11. Appliance according to Claim 10, **characterized in that** a quick-action valve (20) and a main control valve (14) are respectively arranged one behind the other in the water supply line (12), and **in that** the leak test line (32) connects the fuel supply line (11) to the water supply line (12) after the two valves (14, 20).

12. Appliance according to one of Claims 10 and 11, **characterized in that** a plurality of shut-off elements (33, 34) are, for safety reasons, arranged one behind the other in the leak test line (32).

## Revendications

1. Procédé pour le contrôle de l'étanchéité d'un réseau de distribution de combustible (10) d'une turbine à gaz avec un système à plusieurs brûleurs, réseau de distribution de combustible (10) qui distribue du combustible par une conduite de fourniture de combustible (11) à une pluralité de brûleurs (L1, ..., L18), **caractérisé en ce que** le réseau de distribution de combustible (10) est maintenu sous pression avec un fluide auxiliaire liquide se trouvant sous pression et ininflammable, pendant l'arrêt de la turbine à gaz.

2. Procédé suivant la revendication 1, **caractérisé en ce que** les conduites de fourniture de combustible (11, 27) du réseau de distribution de combustible (10) sont séparables en plusieurs endroits, pour des raisons de facilité de montage, et **en ce que** le contrôle de l'étanchéité est effectué après chaque action de montage sur les conduites de combustible séparables (11, 27) avant le prochain démarrage de la turbine à gaz.

3. Procédé suivant l'une des revendications 1 et 2, **caractérisé en ce que** l'on utilise l'eau comme fluide auxiliaire pour le contrôle de l'étanchéité.

4. Procédé suivant la revendication 3, **caractérisé en ce qu'**en plus du réseau de distribution de combustible (10), il y a dans la turbine à gaz un réseau de distribution d'eau (35), qui distribue de l'eau par une conduite de fourniture d'eau (12) pour l'injection aux brûleurs (L1, ..., L18), et **en ce que**, pour le contrôle de l'étanchéité, le réseau de distribution d'eau (35) est raccordé au réseau de distribution de combustible à contrôler (10) pendant la durée de l'opération de contrôle.

5. Procédé suivant la revendication 4, **caractérisé en ce que** le réseau de distribution d'eau (35) est raccordé au réseau de distribution de combustible (10) par une conduite de détection de fuites (32), dans laquelle est disposé au moins un organe d'arrêt (33, 34), et **en ce que**, pour le contrôle de l'étanchéité, le au moins un organe d'arrêt (33, 34) est ouvert pendant la durée de l'opération de contrôle.

6. Procédé suivant l'une des revendications 4 et 5, **caractérisé en ce que**, pour le réseau de distribution d'eau (35), il y a des moyens, en particulier sous la forme d'une pompe à eau (36), pour produire la pression d'eau nécessaire pour l'injection dans les brûleurs (L1, ..., L18), et **en ce que** les moyens (36) sont utilisés pour produire la pression d'eau nécessaire pour le contrôle de l'étanchéité du réseau de distribution de combustible (10).

7. Procédé suivant l'une quelconque des revendications 1 à 6, **caractérisé en ce que** le réseau de distribution de combustible (10) est mis sous pression, pour le contrôle de l'étanchéité, avec une pression qui correspond à la pression maximale admissible du combustible susceptible de se produire pendant le fonctionnement.

8. Procédé suivant l'une quelconque des revendications 1 à 7, **caractérisé en ce que** le contrôle de l'étanchéité du réseau, de distribution de combustible (10) est effectué par un contrôle visuel de la sortie du fluide auxiliaire, respectivement de l'eau, hors du réseau.

9. Procédé suivant l'une quelconque des revendication 1 à 7, **caractérisé en ce que** le contrôle de l'étanchéité du réseau de distribution de combustible (10) est effectué par un contrôle de la pression régnant dans le réseau fermé.

10. Dispositif pour la mise en oeuvre du procédé suivant l'une quelconque des revendications 1 à 9, comprenant une turbine à gaz avec un système à plusieurs brûleurs, un réseau de distribution de combustible (10), réseau de distribution de combustible (10) qui distribue du combustible par une conduite de fourniture de combustible (11) aux brûleurs individuels (L1, ..., L18), ainsi qu'un réseau de distribution d'eau (35), qui distribue de l'eau par une conduite de fourniture d'eau (12) pour l'injection aux brûleurs (L1, ..., L18), **caractérisé en ce que** le réseau de distribution d'eau (35) est raccordé au réseau de distribution de combustible (10) par une conduite de détection de fuites (32), dans laquelle est disposé au moins un organe d'arrêt (33, 34).

11. Dispositif suivant la revendication 10, **caractérisé en ce qu'**une soupape à fermeture rapide (20) et une soupape de régulation principale (14) sont disposées chaque fois l'une derrière l'autre dans la conduite de fourniture d'eau (12), et **en ce que** la conduite de détection de fuites (32) relie la conduite de fourniture de combustible (11) à la conduite de fourniture d'eau (12) après les deux soupapes (14, 20).

12. Dispositif suivant l'une des revendications 10 et 11, **caractérisé en ce qu'**une pluralité d'organes d'arrêt (33, 34) sont disposés l'un derrière l'autre dans la conduite de détection de fuites (32), pour des raisons de sécurité.
